# EUROPÄISCHE PATENTSCHRIFT

(11) **EP 1 366 231 B1**
(45) Veröffentlichungstag und Bekanntmachung des Hinweises auf die Patenterteilung: **19.04.2006**
(21) Anmeldenummer: 02704700.0
(22) Anmeldetag: 08.02.2002
(51) Int. Cl.: D21C 1/00

(54) **VERFAHREN ZUM ABTRENNEN VON HEMICELLULOSEN AUS HEMICELLULOSEHALTIGER BIOMASSE**
METHOD FOR SEPARATING HEMICELLULOSES FROM A BIOMASS CONTAINING HEMICELLULOSES
PROCEDE PERMETTANT DE SEPARER LES HEMICELLULOSES D'UNE BIOMASSE CONTENANT DES HEMICELLULOSES

(30) Priorität: 28.02.2001 DE 10109502
(43) Veröffentlichungstag der Anmeldung: 03.12.2003
(73) Patentinhaber: Rhodia Acetow GmbH, 79108 Freiburg (DE)
(72) Erfinder: KETTENBACH, Gerhard, 79639 Grenzach-Wyhlen (DE); STEIN, Armin, 79341 Kenzingen (DE)
(74) Vertreter: Hagemann, Heinrich
(86) Internationale Anmeldenummer: PCT/EP2002/001359
(87) Internationale Veröffentlichungsnummer: WO 2002/075042

(56) Entgegenhaltungen:
- WO-A-00/47812
- GB-A- 1 500 050
- US-A- 5 876 779

## Beschreibung

Die Erfindung betrifft ein Verfahren zum Abtrennen von Hemicellulosen aus hemicellulosehaltiger Biomasse.

Bei Zellstoffen unterscheidet man zwischen Papierzellstoff, der neben dem Hauptbestandteil α-Cellulose bis zu 25% Hemicellulose enthalten kann, und höherwertigem Chemiezellstoff mit einem α-Celluloseanteil von über 90%, dessen Anteil an Hemicellulose einige Prozent nicht überschreiten sollte. Bekanntermaßen stellt Chemiezellstoff einen der wichtigsten Kostenfaktoren bei der Produktion von Celluloseacetat, Filtertow und anderen hochwertigen Celluloseprodukten dar. An den als Ausgangssubstanz für die Herstellung dieser Celluloseprodukte dienenden Chemiezellstoff werden höchste Qualitätsansprüche gestellt. So soll der α-Cellulosegehalt, insbesondere wenn eine nachfolgende Acetylierung vorgesehen ist, in der Regel über 96% liegen. Diese hochwertigen Chemiezellstofftypen werden mit weniger als 2% Marktanteil der weltweiten Zellstoffproduktion nur noch von wenigen Lieferanten angeboten.

Zur Herstellung solcher Chemiezellstoffe aus Holz oder vergleichbarer Biomasse ist neben dem Entfernen des Lignins auch ein möglichst weitgehendes Abtrennen der Hemicellulosen notwendig, da Holz einen Verbundwerkstoff mit den wesentlichen Bestandteilen Cellulose, Lignin und Hemicellulosen darstellt.

Es sind im Stand der Technik zahlreiche Verfahren zum chemischen Abbau und Entfernen von Hemicellulosen aus hemicellulosehaltiger Biomasse entwickelt worden. Ein klassisches Verfahren zum Entfernen von Hemicellulosen bedient sich eines hydrolytischen Aufschlußprozesses. Dabei kann das Behandlungsgut z.B. durch Inkontaktbringen mit überhitztem Wasserdampf bei erhöhtem Druck einem hydrolytischen Aufschluß unterworfen werden. Der dabei erzielte Abbau der Hemicellulosen ist jedoch nicht selektiv, wobei zusätzlich ein signifikanter Abbau der Cellulose selbst stattfindet.

Eine weitere Möglichkeit besteht in der Hydrolyse unter sauren Bedingungen. Auch nach diesem Aufschlußverfahren werden die Hemicellulosen noch nicht selektiv genug abgebaut. Es wird ein deutlicher Abfall der Viskosität beobachtet, was auf einen erheblichen Abbau der Cellulose zurückzuführen ist. Teilweise geht dieser Celluloseabbau bereits mit einer Verschlechterung des Weißgrades einher. Eine Verbesserung konnte durch nachgeschaltete Extraktion der mit Dampf bzw. Säure vorbehandelten Zellstoffe mit alkalischen Medien erzielt werden. Hierdurch können etwas höhere α-Cellulosegehalte erreicht werden. Doch auch mit dieser Nachbehandlung gelingt das Entfernen der Hemicellulosen nicht ausreichend selektiv. Es ist überraschend, daß sich dieses klassische Aufschlußverfahren der Hemicellulosen mit Säuren und Basen als völlig unbrauchbar erweist. Dies ist vermutlich auch darauf zurückzuführen, daß die Hemicellulosen in Hochausbeute-Papierzellstoffen zum Teil wieder auf die Cellulosefasern ausgefällt werden. In dieser Form sind Hemicellulosen offensichtlich schwerer hydrolytisch aufzuschließen als im ursprünglichen Rohstoff Holz.

Eine weitere bekannte Möglichkeit zum Abtrennen von Hemicellulosen aus hemicellulosehaltiger Biomasse besteht darin, die Hemicellulosen durch geeignete oxidative bzw. reduktive Behandlung selektiv abzubauen und damit in eine lösliche und somit extrahierbare Form zu bringen. Die dabei ablaufenden chemischen Reaktionen ähneln denen, die auch bei der Zellstoffveredelung eingesetzt werden. Dabei werden typischerweise Oxidationsmittel, wie Harnstoffnitrat, H₂O₂ und Percarbamid in wäßriger Lösung, teils unter alkalischen oder sauren Bedingungen, oder Reduktionsmittel, wie z.B. Na[BH₄] in Wasser oder Methanol, verwendet. Durch oxidativen Abbau beispielsweise mit Percarbamid ist es zwar prinzipiell möglich, Hemicellulosen im Papierzellstoff abzubauen. Der Bereich qualitativ hochwertiger Chemiezellstoffe mit Gehalten von α-Cellulose über 96% ist jedoch nicht ohne merklichen DP-Abbau der Cellulose zu erreichen. Auch nach diesen Verfahren kann somit kein hinreichend selektiver Abbau der Hemicellulosen ohne damit einhergehenden Celluloseabbau erreicht werden.

Demzufolge gehen die Verfahren nach dem Stand der Technik entweder von teuren Rohstoffen, insbesondere Baumwoll-Linters, aus oder erfordern eine aufwendige Verfahrensfuhrung, wobei es in der Regel zu einer mehr oder weniger starken Beschädigung des Zellstoffs kommt, die sich in einer Erniedrigung des Polymerisationsgrades (DP-Wert), einem Verlust an Zugänglichkeit oder Reaktivität und einer unerwünschten Färbung, beispielsweise bei einer nachfolgenden Acetylierung, auswirkt. Die US-A-5 876 779 befaßt sich mit einem Verfahren zur Herstellung eines Cellulose-enthaltenden Getreideextrakts. Dabei werden Pflanzenfasern mit einem Natriumhydroxidlösung extrahiert. Die erhaltene Mischung wird angesäuert, um eine erste Hemicellulosefraktion auszufällen. Eine zweite Hemicellulosefraktion wird aus dem erhaltenen Filtrat durch Zugabe von Ethanol ausgefällt. Der angesprochene Extrakt ist im wesentlichen ein Alkali-löslicher Komplex einer Hemicellulose-Mischung.

Vor diesem Hintergrund lag der Erfindung die Aufgabe zugrunde, ein Verfahren zum Abtrennen von Hemicellulosen aus hemicellulosehaltiger Biomasse bereitzustellen, das die Nachteile der vorstehend beschriebenen Verfahren vermeidet und in einfacher und schonender Weise die Gewinnung von hochwertigen Zellstoffen ermöglicht. Insbesondere soll das Verfahren ein selektives Abtrennes der Hemicellulosen aus cellulosehaltiger Biomasse ermöglichen, ohne daß ein signifikanter Abbau von Cellulose stattfindet. Das Verfahren soll darüber hinaus wirtschaftlich, d.h. kostengünstig, arbeiten und keine oder wenig umweltbelastende Emissionen erzeugen.

Diese Aufgabe wird erfindungsgemäß gelöst durch ein Verfahren zum Abtrennen von Hemicellulosen aus hemicellulosehaltiger Biomasse durch die folgenden Schritte:
a) Extrahieren der Hemicellulosen aus der hemicellulosehaltigen Biomasse durch Behandeln mit einer Komplexverbindung in wäßriger Lösung unter Bilden eines löslichen Komplexes der Hemicellulosen, wobei als Komplexverbindung im Schritt a) eine Koordinationsverbindung aus einem Übergangsmetall und einem ein- oder mehrzähnigen stickstoffhaltigen und/oder sauerstoffhaltigen Liganden eingesetzt wird, und
b) Abtrennen der komplexierten Hemicellulosen aus der Biomasse.

Das erfindungsgemäße Verfahren bezieht sich demnach auf die Herstellung von hochwertigen Zellstoffen mit einem α-Celluloseanteil von über etwa 96% und einem sehr geringen Anteil an Hemiceuuiosen. Es ermöglicht daher in Form einer Extraktion ein hochselektives Abtrennen von Hemicellulosen aus hemicellulosehaltiger Biomasse unter milden Bedingungen, wobei es zu keinem nennenswerten Abbau von Cellulose kommt.

Die im erfindungs gemäßen Verfahren als Ausgangsmaterial einsetzbare Biomasse unterliegt im Rahmen der Erfindung keiner Beschränkung. Beispiele bevorzugter Rohzellstoffe sind Nadelholzsulfat, Fichtensulfit, Buchensulfit und Eukalyptussulfat. Beispielsweise stellt Rohzellstoff eine besonders geeignete Ausgangssubstanz für das Verfahren dar und kann so zu hochwertigem Chemiezellstoff veredelt werden. Bevorzugt sind Rohzellstoffe, die durch Delignifizierung von lignoceDulosehaltiger Biomasse, insbesondere von Holz, gewonnen werden. Vorteilhaßerweise wird die Biomasse in fein zerkleinerter Form, insbesondere in gemahlener Form, eingesetzt.

Gemäß Schritt a) des erfindungsgemäßen Verfahrens wird eine Komplexverbindung in wäßriger Lösung eingesetzt, welche mit den Hemicellulosen lösliche Komplexe ausbildet und diese aus der Biomasse herauslöst. Hierbei werden Koordinationsverbindungen aus einem Übergangsmetall und einem ein- oder mehrzähnigen stickstoffhaltigen und/oder sauerstoffhaltigen Liganden verwendet. Besonders bevorzugte Übergangsmetalle sind Nickel. Kupfer, Cadmium, Kobalt, Palladium und/oder Zink. Als Liganden sind mehrzähnige stickstoffhaltige Liganden bevorzugt, insbesondere Tris(2-aminoethyl)amin, Ethylendiamin und/oder Diethylentriamin- Nach einer erfludungsgemäß bevorzugten Ausfuhnmgsform wird als Komplexverbindung [Ni(Tris(2-aminoethyl)amin)(OH)₂], nachfolgend als "Nitren" bezeichnet, herangezogen, wobei "tren" für den Liganden Tris(2-aminöethyl)aain steht.

Die Konzentration der Komplexverbindung in wäßriger Lösung liegt vorzugsweise im Bereich von etwa 0,1 bis 10, insbesondere etwa 1 bis 3 Gew.%. Wird der Wert von 0,1 Gew.-% unterschritten, können keine löslichen Komplexe der Hemicellulose mehr ausgebildet werden. Bei Überschreitung einer Konzentration der Komplexverbindung in wäßriger Lösung von 10 Gew.-% kann es bereits zu einer merklichen Anlösung der Cellulose kommen, was unerwünscht ist.

Die Extraktion kann ein- oder mehrstufig durchgeführt werden, wobei bevorzugt im Gegenstrom gearbeitet wird. Die Temperatur bei der Extraktion liegt bevorzugt im Bereich von etwa 0°C bis 90°C, insbesondere bei etwa 10°C bis 80°C und ganz besonders bevorzugt bei etwa 20 bis 40°C. Vorzugsweise wird etwa 5 min bis 16 Stunden, insbesondere etwa 15 min bis 2 Stunden, extrahiert. Das bei der Extraktion eingesetzte Flottenverhältnis beträgt in einer bevorzugten Ausführungsform etwa 1:3 bis 1:30, insbesondere etwa 1:5 bis 1:20, wobei im Rahmen der Erfindung unter "Flottenverhältnis" das Verhältnis von hemicellulosehaltiger Biomasse (in kg) zur wäßrigen Lösung der Komplexverbindung (in l) verstanden wird. Der pH-Wert beträgt bei der Extraktion vorzugsweise etwa 10 bis 14, insbesondere etwa 13 bis 14.

Die durch Reaktion mit der Komplexverbindung in Lösung vorliegenden, komplexierten Hemicellulosen werden anschließend in Schritt b) aus der zurückbleibenden verfahrensmodifizierten Biomasse abgetrennt. Das Abtrennen erfolgt vorzugsweise durch Filterpressen. Um die abgepreßte verfahrensmodifizierte Biomasse von anhaftenden Resten der komplexierten Hemicellulosen zu reinigen, wird die Biomasse zweckmäßigerweise einem oder mehreren Waschschritten unterzogen. Bevorzugt wird mit Wasser und/oder einer wäßrigen Lösung einer verdünnten Säure, wie Essigsäure, einem Komplexbildner für das Übergangsmetall, wie Tris(2-aminoethyl)amin, und/oder Ethanolamin, NaOH oder Ammoniak, gewaschen. Als besonders vorteilhaft hat sich auch die Wäsche mit einer wäßrigen Lösung von Ammoniak einer Konzentration von etwa 0,5 bis 3%, insbesondere etwa 1%, erwiesen. Um eine noch wirksamere Reinigung der verfahrensmodifizierten Biomasse zu erzielen, kann der Waschschritt auch in Form einer Soxhletextraktion, z.B. mit etwa 0,5 bis 3%-iger Essigsäure, durchgeführt werden. Der so gewonnene Zellstoff kann unmittelbar verwendet oder auf herkömmliche Art weiterverarbeitet werden, beispielsweise unter Derivatisierung.

Aus der abgetrennten Lösung der komplexierten Hemicellulosen können durch Absenken des pH-Wertes auf unter 10, insbesondere auf etwa 5 bis 3, die Hemicellulosen ausgefällt werden. Durch das Absenken des pH-Wertes werden die gebildeten Olat-Komplexe instabil, so daß es zum Ausfällen der Hemicellulosen kommt Die Hemicellulosen können nach dem Ausfällen, z.B. durch Filtration, isoliert und gegebenenfalls im Anschluß ein oder mehrmals gewaschen werden.

Die durch Abtrennen der Hemicellulosen erhaltene verfahrensmodifizierte Biomasse, zeichnet sich durch einen geringen Restgehalt an Hemicellulosen aus. Besonders bevorzugt weist die so erhaltene modifizierte Biomasse einen Restgehalt an Hemicellulosen von weniger als etwa 8%, insbesondere weniger als etwa 4%, auf.

Die mit dem erfindungsgemäßen Verfahren erhältlichen Hemicellulosen sind zum Beispiel Xylan oder Galactomannan. Ein besonders interessantes Produkt, welches bei Isolierung der Hemicellulosen vorliegt, stellt das Xylan dar. Polymeres Xylan ist besonders im Pharmaziesektor äußerst gefragt. Xylan wird als Rohstoff zur Herstellung von Xylanpolysulfat (Pentosanpolysulfat) eingesetzt. Xylanpolysulfat hat ein vielfältiges Wirkungsspektrum, das mit dem des Heparins vergleichbar ist. Der ständig steigende Bedarf an derartigen Wirkstoffen läßt sich mit natürlichem Heparin nicht decken, so daß ständig Ersatzstoffe gesucht werden. Xylanpolysulfat findet zum Beispiel als Andthrombosemittel, Antikoagulans, zur Senkung der Blutfettwerte, gegen Arthrose, als Immunstimulans (Anti-Aids, Anti-Tumor) und in weiteren Pharmazeutika mit einem umfangreichen Indikationsspektrum Verwendung (z.B. TAVAN-SP 54®, Fibrezym®, Thrombocid®, Klismacort®, Tacholiquin®, CARTOPHEN VET®, Elmiron® und andere). Es zeigt sich daher, daß die erfindungsgemäß isolierbaren Hemicellulosen für den industriellen Einsatz von großem Interesse sind.

Ein weiterer zu berücksichtigender Faktor nach Abschluß der Verfahrensmaßnahme b) ist der Restgehalt des Übergangsmetalls, wie z.B. Nickel, das durch die Komplexverbindung in die anfallende verfahrensmodifizierte Biomasse und die Hemicellulosen gelangt. Falls der Gehalt an Übergangsmetall in den Verfahrenserzeugnissen für die erwünschte Weiterverarbeitung zu hoch liegt, ist es möglich, diesen durch Wasch- und/oder Behandlungsschritte auf ein gewünschtes Maß zu senken. Es kann in Einzelfällen von Vorteil sein, wenn die nach dem erfindungsgemäßen Verfahren erhältliche verfahrensmodifizierte Biomasse einen Gehalt des fraglichen Übergangsmetalls von weniger als etwa 100 ppm, insbesondere weniger als etwa 10 ppm, aufweist, was beispielsweise durch entsprechende Wäschen erreicht werden kann.

Insgesamt führt eine Wirtschaftlichkeitsbetrachtung des erfindungsgemäßen Verfahrens zu sehr positiven Ergebnissen. Die Wirtschaftlichkeit ergibt sich dadurch, daß die in Lösung komplexiert vorliegenden Hemicellulosen ohne großen Aufwand aus der Biomasse durch einfache Verfahrensschritte abgetrennt werden können. Aus wirtschaftlicher Sicht ist es insbesondere von Vorteil, wenn die abgetrennten Hemicellulosen insbesondere in Form von Xylanen und Mannanen anfallen und somit ein wertvolles Nebenprodukt darstellen. Besonders effektiv erweist sich das Verfahren daher für solche Papierzellstoffe mit einem hohen Xylananteil, wie z.B. Eukalyptuszellstoff (Cellbi von Bacell).

Zur weiteren Verbesserung der Wirtschaftlichkeit kann zweckmäßigerweise auf Technologien, wie die Dampfrekompression oder Membranabtrennung, zur Rückgewinnung bzw. Aufkonzentrierung der verwendeten Komplexverbindung in Lösung zurückgegriffen werden, so daß das Extraktionsmittel wiederverwendet werden kann und eine wirtschaftliche Führung im Kreislauf möglich wird. Es kann von preisgünstigen Rohstoffen, wie beispielsweise Papierzellstoff, ausgegangen werden. Das Verfahren führt zu hochwertigem Chemiezellstoff, bei dem die Cellulose keine DP-Erniedrigung durch hydrolytische oder oxidative Spaltung erfahren hat.

Auch eine Kombination des erfindungsgemäßen Verfahrens mit bekannten Verfahren ist möglich. So kann der bekannte Delignifizierungsprozeß mit dem erfindungsgemäßen Verfahren vorteilhafterweise zu einem wirtschaftlich interessanten Gesamtprozeß kombiniert werden. So kann ein sehr preisgünstiger Hochausbeute-Zellstoff in einer ersten Stufe durch Delignifizierung behandelt werden (beispielsweise Behandeln von Fichtenholz mit Ethanolamin), wonach sich das erfindungsgemäße Verfahren unmittelbar als zweite Stufe anschließt. Aus Kombination beider Verfahren ergibt sich eine Energieeinsparung, da zusätzliche Zwischenschritte zur Reinigung oder Trocknung ausgeschlossen werden können. Ferner kann der üblicherweise einzusetzende pH-Wechsel zum Aufschluß der Hemicellulosen entfallen. Dies bedeutet ein Vermeiden von Ausbeuteverlusten und einen geringeren Celluloseabbau, welcher durch Kombination beider Verfahren erreicht wird.

Die erfindungsgemäße technische Lehre soll nachfolgend anhand der beigefügten Figuren weiter veranschaulicht werden, wobei die Erfindung nicht auf die erläuterten Ausführungsformen beschränkt ist. Vielmehr sind dem Fachmann im Rahmen der erfindungsgemäßen Lehre weitere Ausgestaltungen geläufig. In den Figuren zeigt:
- Fig. 1: die chemische Formel einer erfindungsgemäß einsetzbaren Komplexverbindung zur Extraktion der Hemicellulosen aus der Biomasse sowie deren Bildungsreaktion und erfindungsgemäße Umsetzung;
- Fig. 2: eine schematische Darstellung einer bevorzugten Ausfiihrungsform des erfindungsgemäßen Verfahrens;
- Fig. 3: ein Diagramm der Restnickelgehalte im Zellstoff bzw. Celluloseacetat nach verschiedenen Wasch-/Verfahrensstufen und
- Fig.4: ein Diagramm der Restnickelgehalte im Xylan nach verschiedenen Waschstufen.

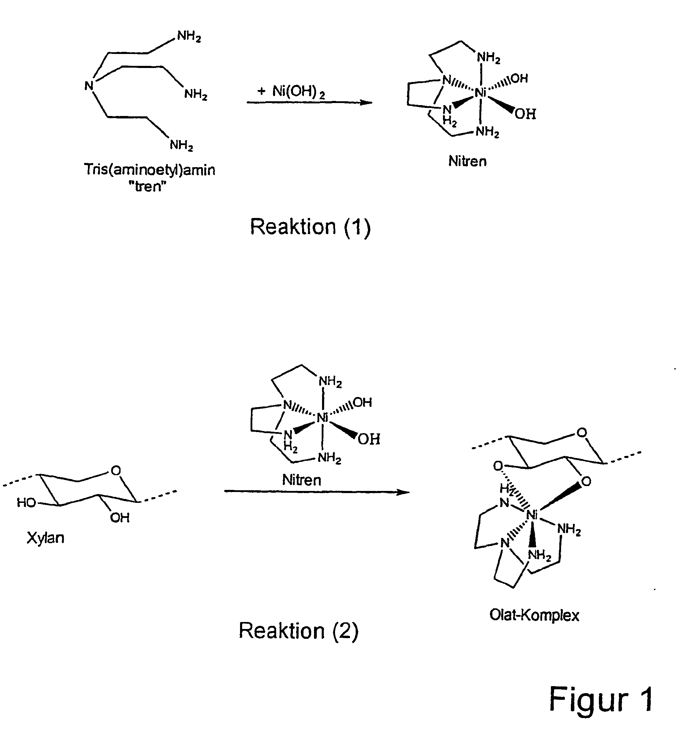

In Fig. 1 ist ein Beispiel einer Komplexverbindung zur Extraktion der Hemicellulosen aus der hemicellulosehaltigen Biomasse nach Schritt a) des erfindungsgemäßen Verfahrens dargestellt. Hierbei handelt es sich um eine Koordinationsverbindung aus einem Übergangsmetall und einem mehrzähnigen stickstoffhaltigen Liganden, wobei das Übergangsmetall Nickel darstellt. Der mehrzähnige stickstoffhaltige Ligand ist nach diesem Beispiel Tris-(2-aminoethyl)amin und wird durch Umsetzung von Nickel-IIhydroxid mit Tris-(2-aminoethyl)amin im Verhältnis 1:1 als Komplex erhalten. Reaktion (1) gibt die Bildung des [Ni(Tris(2-aminoethyl)amin)(OH)₂] ("Nitren") wieder. Es handelt sich um eine tiefblaue Lösung mit einem pH-Wert von etwa 13 bis 14. Der Komplex bildet relativ stabile Olat-Komplexe mit Diolen, wie z.B. Zuckeralkoholen. Am Beispiel des Xylans wird die Komplexbildung von Nitren mit Hemicellulosen in Reaktion (2) dargestellt.

Aufgrund der komplexbildenden Eigenschaften ist das Nitren in der Lage, Polysaccharide aufzulösen. Die hierfür notwendige Konzentration des Nitrens hängt von der Struktur, d.h. u.a. von den Zuckerbausteinen, der Verknüpfung, der Kettenlänge und dem Molekulargewicht der Polysaccharide ab. Vorteilhafterweise liegt die Konzentration der Komplexverbindung in wäßriger Lösung im Bereich von etwa 0,1 bis 10 Gew.-%.

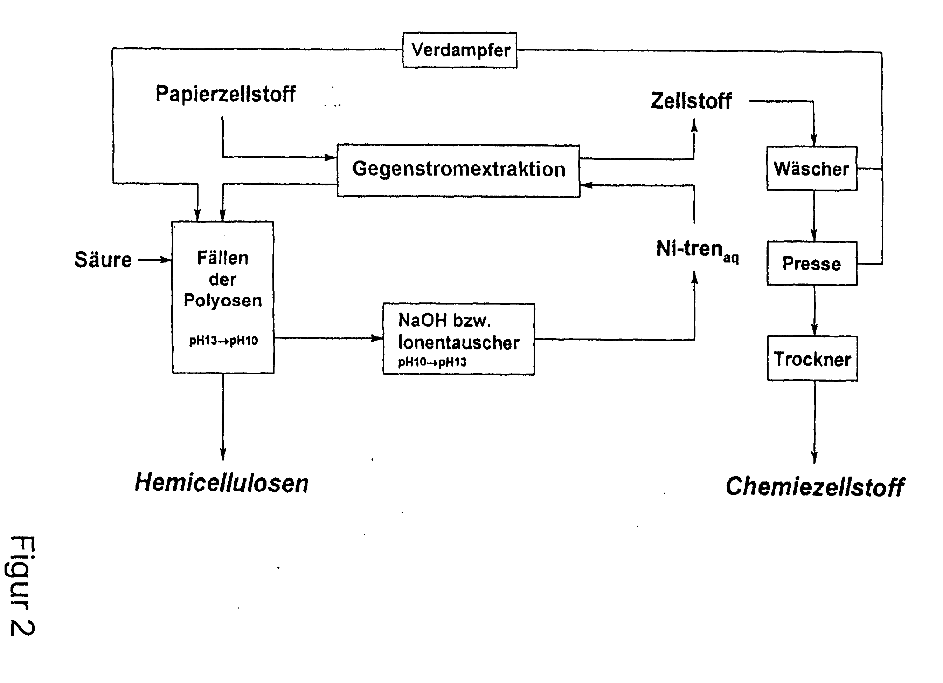

Fig. 2 zeigt ein vereinfachtes Schema einer bevorzugten Ausführungsform des erfindungsgemäßen Verfahrens. Hierbei wird gemäß Schritt a) der zu extrahierende Zellstoff mit der Komplexverbindung [Ni(tren)(OH)₂] ("Nitren") in einer verdünnten wäßrigen 1-bis 4%igen Lösung versetzt und fur einige Zeit intensiv durchmischt. Es wird gemäß Schritt b) abfiltriert, mit 0,4%iger Natronlauge und danach mit Wasser gewaschen. Der extrahierte verfahrensmodifizierte Zellstoff kann anschließend, gegebenenfalls nach Trocknen, beispielsweise unter Derivatisierung, weiterverarbeitet werden. Das blaue Filtrat wird mit wenig Säure versetzt, wodurch sich der pH-Wert von 13 auf 10 ändert. Hierdurch fallen die Hemicellulosen aus, welche auf einfache Weise abgetrennt werden können. Durch Zugabe von NaOH und somit Anhebung des pH-Werts von 10 auf pH 13 wird das Extraktionsmittel regeneriert und kann in den Kreislauf rückgeführt werden.

Die beschriebene pH-Regulierung kann auch über Ionenaustauscher erfolgen. So kann beispielsweise vermieden werden, daß sich im Extraktionskreislauf Salze anreichern, die die Eigenschaften des Extraktionsmittels verschlechtern. Die Waschlaugen, die bei der Reinigung des Zellstoffs anfallen, können über einen Verdampfer aufkonzentriert und in den Kreislauf rückgeführt werden. Die Verbrauchschemikalien in dieser erfindungsgemäßen Variante sind somit Natronlauge, Säure bzw. Ionenaustauscher, wobei diese insgesamt in weit geringeren Mengen als in den bekannten alkalischen Extraktionsverfahren zum Einsatz kommen.

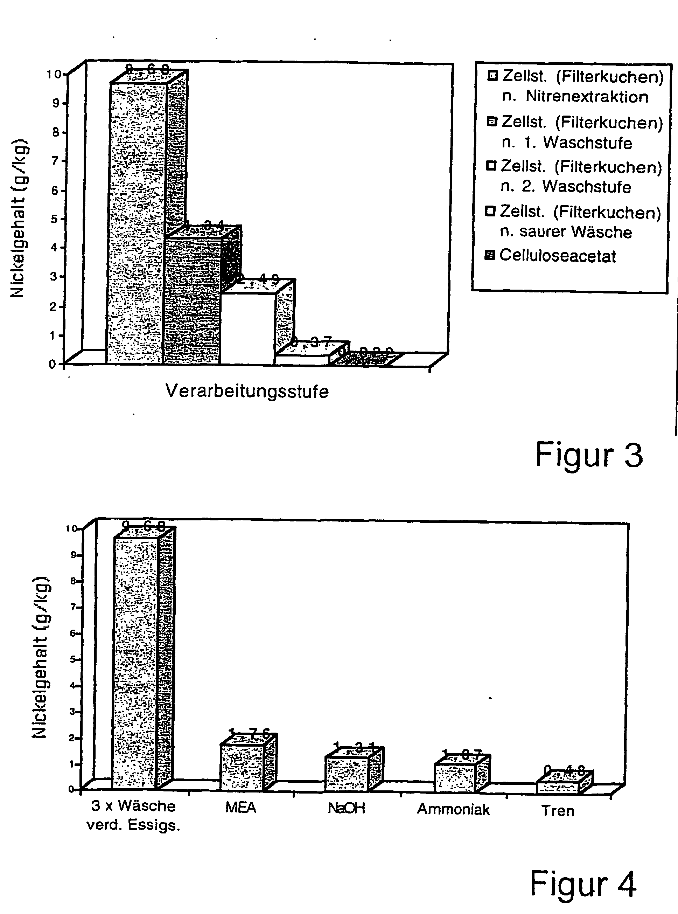

Fig. 3 veranschaulicht anhand eines Diagramms die Restnickelgehalte des Zellstoffs bzw. von Celluloseacetat nach verschiedenen Wasch-/Behandlungsstufen. Es hat sich erfindungsgemäß gezeigt, daß es von Vorteil sein kann, den Restgehalt an Übergangsmetall aus der eingesetzten Komplexverbindung entsprechend zu reduzieren. So ist es möglich, durch eine entsprechende Wäsche, z.B. mit Wasser, Nitren-Reste aus dem Zellstoff zu entfernen. Durch weitere Wäschen mit verdünnter Säure, wie Essigsäure, kann der verbleibende Gehalt des Übergangsmetalls deutlich abgesenkt werden. So kann nach Abpressen eines Filterkuchens mit ca. 40 Masse-% Feststoffanteil und einem Nickelgehalt von 0,37 g Ni/kg feuchter Zellstoff nach Soxhletextraktion mit 1%iger Essigsäure der Nickelgehalt auf 0,029 g Ni/kg Filterkuchen deutlich abgesenkt werden.

Zusätzlich kann auch eine Gegenstromwäsche erfolgen, um die Effektivität bei den Waschvorgängen zu erhöhen.

Auch kann der Zusatz geeigneter verdrängender Liganden, wie einer Ammoniaklösung oder verdünnter Natronlauge, zur Wäsche in Frage kommen, welche die Komplexverbindung und das Polysaccharid aus dem Olat-Komplex freisetzen.

Eine weitere Möglichkeit den Übergangsmetallgehalt abzusenken, besteht darin, einen Lösungsmittelaustausch vorzunehmen. Beispielsweise wurde ein Zellstoff mit 0,37 g Ni/kg Filterkuchen nach Lösungsmittelaustausch in Eisessing zur Acetylierung und Verseifung zum 2,5-Celluloseacetat herangezogen. Das erhaltene Celluloseacetat hatte nur noch einen Restnickelgehalt von 23 ppm.

Für eine Verwendung als Filter-Tow ist es bevorzugt, den Übergangsmetallgehalt auf < 10 ppm abzusenken. Dies kann beispielsweise durch Umfällen von Celluloseacetat erreicht werden, wodurch Restgehalte von weniger als 1 ppm erzielt werden können.

Die einzelnen Behandlungsstufen mit den jeweiligen Restnickelgehalten gehen aus Fig. 3 hervor.

In Fig. 4 ist dargestellt, daß auch hinsichtlich der abgetrennten Hemicellulosen die Möglichkeit besteht, durch entsprechende Nachbehandlung den Nickelgehalt in gewünschtem Maße abzusenken. Dies erfolgt zweckmäßigerweise, wenn eine entsprechend kommerziell verwertbare Qualität, beispielsweise von Xylan, erforderlich ist. So zeigen Wäschen mit basischen, verdrängenden Liganden einen deutlich positiven Effekt. Die Wirksamkeit der Nickelentfernung, z.B. aus Xylan, nimmt jeweils für eine 1%ige Lösung in der Reihenfolge Ethanolamin < NaOH < Ammoniak < Tris-(2-aminoethyl)amin zu. Die Nachbehandlung einer nickelhaltigen Xylanfällung mit überschüssigem Nitren ist dabei erwartungsgemäß am effektivsten. Auch besteht die Möglichkeit, mit einer 1%igen Ammoniaklösung zu behandeln, was insbesondere vorteilhaft ist, da Ammoniak aufgrund seiner Flüchtigkeit leicht aus der stark alkalischen Nitrenlösung ausgetrieben und abgetrennt werden kann.

Die mit der Erfindung verbundenen Vorteile sind vielfältig: So zeigt das erfindungsgemäße Verfahren bezüglich der quantitativen und qualitativen Rahmenbedingungen gegenüber den eingangs geschilderten Verfahren des Standes der Technik eine überraschende Flexibilität. Es kann eine Vielzahl von Zellstoffen als Ausgangsmaterialien herangezogen werden, welche unter Entfernung von Hemicellulosen den einfachen Zugang zu Chemiezellstoffen ermöglichen. Man kann von preisgünstigen Rohstoffen, wie beispielsweise Papierzellstoff, ausgehen. Papierzellstoff führt zu hochwertigem Chemiezellstoff, bei dem die Cellulose keine DP-Erniedrigung durch hydrolytische oder oxidative Spaltung unterlag. Demzufolge wird in einfacher Weise ein ausreichend selektives und effektives Entfernen der Hemicellulose ohne Schädigung der α-Cellulose möglich. So kann Papierzellstoff (α-Cellulosegehalt typischerweise etwa 81%) ohne Schädigung des Zellstoffs (kein Celluloseabbau) zu einem Chemiezellstoff mit einem α-Cellulosegehalt von über 96% veredelt werden. Darüber hinaus ist die Zugänglichkeit und somit die Reaktivität des Zellstoffs gegenüber den nach bekannten Verfahren hergestellten Zellstoffen erhöht.

Es können so hochgereinigte Chemiezellstoffe für Spezialanwendungen etwa als Lintersersatz oder für Derivate eingesetzt werden, die einen besonders hohen Polymerisationsgrad und α-Cellulosegehalt erfordern, wie beispielsweise Celluloseester, Celluloseether, Cellulosenitrate etc. Erfindungsgemäß kann auch eine Veredelung von Rohlinters zu Linterszellstoff erfolgen, was insbesondere in wirtschaftlicher Hinsicht von Interesse ist.

Ein wesentlicher Vorteil des erfindungsgemäßen Verfahrens ist insbesondere darin zu sehen, daß neben der einfachen Durchführung in wenigen Schritten bei Raumtemperatur oder auch unter Kühlung das Extraktionsmittel, beispielsweise unter Einsatz von Dampfrekompression oder Membrantrennung, wiederverwendet werden kann, so daß eine wirtschaftliche Führung im Kreislauf möglich wird. Durch die Rückgewinnung der Komplexverbindung kann deren Verlust pro Prozesszyklus auf weniger als etwa 2% eingestellt werden, so daß die Chemikalienkosten gering bleiben. Hierdurch wird ein Einsatz des erfindungsgemäßen Verfahrens im großindustriellen Maßstab möglich.

Die Hemicellulosen, z.B. in Form von Xylanen und Galactomannanen, lassen sich nach Abtrennen der die komplexierten Hemicellulosen enthaltenden Lösung von der extrahierten verfahrensmodifizierten Biomasse durch Ausfällen nahezu quantitativ in polymerer Form isolieren und somit weiter zu fertigen Produkten verarbeiten und kommerziell nutzen. Die Hemicellulosen stellen wertvolle Nebenprodukte des erfindungsgemäßen Verfahrens dar und sind beispielsweise im Pharmaziebereich sehr gefragt.

Ferner ist es möglich, den Übergangsmetallgehalt in den erhältlichen Verfahrensprodukten, wenn notwendig, durch entsprechende Behandlungen, wie Wasch- und Behandlungsstufen, auf ein gewünschtes Maß abzusenken, so daß bei einer Weiterverarbeitung diesbezüglich keine Probleme auftreten.

Das beschriebene Verfahren eignet sich darüber hinaus zur Kombination mit anderen bekannten Verfahren, wie zum Abtrennen von Hemicellulosen aus Ethanolamin-Extraktion delignifiziertem Holz und kann somit besonders vorteilhaft mit diesen Verfahren gekoppelt werden. Hierdurch können Verfahrensschritte eingespart werden, da eine unmittelbare Weiterverarbeitung möglich ist.

Bedingt durch die hohe Effizienz, den geringen Energieaufwand und die Möglichkeit, die verwendete Komplexverbindung nahezu vollständig rückzugewinnen, arbeitet das erfindungsgemäße Verfahren sehr wirtschaftlich und zugleich umweltfreundlich.

Nachfolgend wird die Erfindung anhand von Beispielen, welche die erfindungsgemäße Lehre nicht beschränken sollen, im einzelnen erläutert. Dem Fachmann sind im Rahmen der erfindungsgemäßen Offenbarung weitere Ausführungsbeispiele offensichtlich.

### Beispiele:

Die nachfolgend angegebene Kappa-Zahl (Ligningehalt) wurde anhand der Bestimmung nach Zellcheming Merkblatt IV/37/80 vorgenommen. Dabei wird mit 0,1 n Kaliumpermanganatlösung (3,161 g/l) titriert. Die bei der Hydration pro g Zellstoff verbrauchten ml der 0,1 n Kaliumpermanganatlösung entsprechen der Kappa-Zahl. Der Ligningehalt (in % Zellstoff) läßt sich aus der Kappa-Zahl durch Multiplikation mit 0,15 abschätzen.

### Beispiel 1:

### Zusammensetzung der Ausgangszellstoffe

Für die Versuche wurden Papierzellstoffe verschiedener Hersteller als Ausgangssubstanzen ausgewählt. Diese unterscheiden sich hinsichtlich der verwendeten Rohstoffe (Holzsorten) sowie der Aufschluß- und Bleichverfahren. Die entsprechenden Analysedaten sind in Tabelle 1 bis 3 zusammengefaßt.

**Tabelle 1: Charakterisierung der Ausgangszellstoffe**

| | Kappa-Zahl | Asche % | SiO₂ % | DCM % | Viskosität ml/g | R10 % | Weißgrad* % ISO |
|---|---|---|---|---|---|---|---|
| Fichtensulfit ECF | 1,58 | 0,24 | <0,01 | 0,24 | 795 | 86,15 | 87,5 |
| Eukalyptussulfat ECF | 0,96 | <0,01 | <0,01 | 0,07 | 904 | 94,84 | 89,2 |

| | | | | | | | |
|---|---|---|---|---|---|---|---|
| * am Zellstoffbogen gemessen | | | | | | | |
| DCM Dichlormethan-Extrakt | | | | | | | |
| R10 10%iger Extrakt mit Natronlauge (siehe DIN 54355) | | | | | | | |
| ECF elementarchlorfrei gebleicht | | | | | | | |

**Tabelle 2: Relative Kohlenhydratzusammensetzung der Ausgangszellstoffe**

| | Glucose % | Mannose % | Xylose % | Rückstand % |
|---|---|---|---|---|
| Fichtensulfit ECF | 85,74 | 6,96 | 7,72 | 0 |
| Eukalyptussulfat ECF | 80,57 | 0 | 18,65 | 0 |

Die Werte sind jeweils Mittelwerte aus drei Einzelbestimmungen.

**Tabelle 3: Metallgehalte der Ausgangszellstoffe**

| | Ca [ppm] | Mg [ppm] | Mn [ppm] | Fe [ppm] | Cu [ppm] |
|---|---|---|---|---|---|
| Fichtensulfit ECF | 98 | 352 | 1,0 | 34,6 | 0,6 |
| Eukalyptussulfat | 129 | 74 | 0,3 | 4,8 | 0,6 |
| Eukalyptussulfat (nach Wasserwäsche) | 136 | 49 | 0,3 | 4,9 | 1,1 |
| Eukalyptussulfat (nach Wäsche, getlufft) | 143 | 26 | 0,4 | 16,9 | 4,4 |

Die ausgewählten Zellstoffe stellen somit eine breite Auswahl von Papierzellstoftlypen mit unterschiedlichen α-Cellulosegehalten (ca. 80 bis 89%) bei unterschiedlicher Zusammensetzung der Hemicellulosen (Xylan 4 bis 19%, Mannan 0 bis 7%) dar. Weiterhin bestehen, bedingt durch Herstellungsverfahren, zum Teil erhebliche Unterschiede, insbesondere in der Blatt- und Faserstniktur, im Restligningehalt (Kappa-Zahl) sowie in der Verteilung der Hemicellulosen.

Zur Herstellung von Chemiezellstoff aus Papierzellstoff können verschiedene Wege beschritten werden. Hierzu gehören der klassische Aufschluß der Hemicellulosen mit Säuren und Basen sowie ein oxidativer oder reduktiver Abbau der Hemicellulosen. Nachfolgend werden anhand von Vergleichsbeispielen einzelne Möglichkeiten beschrieben:

### Vergleichsbeispiel 1:

### Hydrolytischer Aufschluß

Zur Hydrolyse ohne saure oder basische Zusätze wurde eine Dampfbehandlung bei 140°C (p = 3,6 bis 3,7 bar) bei Behandlungszeiten von 20 bis 80 Minuten exemplarisch an Eukalyptuszellstoff durchgeführt. Der R18-Wert (18%ige Natronlauge; siehe DIN 54355) ging dabei von ca. 95% auf 91,5% und die Viskosität, welche direkt proportional zum DP ist, von 920 auf 370 ml/g zurück. Der Vergleich mit den Analysen des Ausgangszellstoffs mit ca. 80% α-Cellulosegehalt zeigt, daß unter diesen Bedingungen kein selektiver Abbau der Hemicellulosen sowie ein signifikanter Abbau der Cellulose erfolgt. Eine derartige Behandlung von Zellstofftypen unter den beschriebenen Bedingungen ist daher äußerst nachteilig.

### Vergleichsbeispiel 2:

### Aufschluß unter sauren Bedingungen

Die Versuche zur sauren Hydrolyse der Hemicellulose wurden sowohl mit Eisessig als auch verdünnter Essigsäure (1%ig) durchgeführt. Die Behandlung erfolgte 20 bis 120 Minuten bei Temperaturen von 40 bis 140°C. Auch nach diesem Aufschlußverfahren werden die Hemicellulosen nicht selektiv genug abgebaut. Es wird bereits ein deutlicher Abfall der Viskosität beobachtet, was auf einen erheblichen Abbau der Cellulose zurückzufiihren ist. Teilweise geht dieser Celluloseabbau bereits mit einer Verschlechterung des Weißgrades einher. Die Ergebnisse sind in Tabelle 4 dargestellt.

**Tabelle 4: Aufschluß von Eukalyptussulfat-Papierzellstoff unter sauren Bedingungen**

| **Behandlung** | **Temp.** [°C] | **Zeit** [min] | **Ausbeute** [%] | **η** [ml/g] | **R18** | **Weißgrad** |
|---|---|---|---|---|---|---|
| unbehandelt | - | - | | 920 | 95 | 91,7 |
| 1% Essigsäure | 140 | 20 | 98,6 | 430 | 92,5 | 88,6 |
| 1% Essigsäure | 140 | 40 | 94,3 | 340 | 91,3 | 86,9 |
| 1% Essigsäure | 140 | 80 | 95,9 | 280 | 90,0 | 85,1 |
| Eisessig | 80 | 40 | 99,9 | 875 | 93,4 | 91,8 |
| Eisessig | 140 | 40 | 93,7 | 260 | 85,3 | 86,7 |

### Vergleichsbeispiel 3:

### Alkalische Extraktion nach Dampf- und Säurebehandlung

Durch eine nachgeschaltete Extraktion der mit Dampf oder Säure behandelten Zellstoffe werden zwar etwas höhere α-Cellulosegehalte von etwas über 90% erzielt, doch auch mit dieser Behandlung gelingt die Entfernung der Hemicellulosen bei keiner der untersuchten Zellstoffproben ausreichend selektiv oder gar vollständig.

### Beispiel 2:

### Einstufige Extraktion von Eukalyptuszellstoff

Die Eignung des erfindungsgemäßen Verfahrens zum schonenden Abtrennen von Hemicellulosen aus Rohzellstoffen wurde am Beispiel der Extraktion von Eukalyptuszellstoff mit Nitren untersucht. Die Extraktion erfolgt mit einer 3%-igen Nitrenlösung bei Raumtemperatur über verschiedene Zeitdauem. Die Ergebnisse sind in Tabelle 5 gezeigt.

**Tabelle 5: Einstufige Extraktion von Eukalyptuszellstoff mit 3%-iger Nitrenlösung bei Raumtemperatur**

| Behandlungsdauer | α-Cellulosegehalt [%] |
|---|---|
| Keine | 80,57 |
| 30 min | 92,11 |
| 16 h | 92,80 |

Die in Tabelle 5 beschriebenen Ergebnisse zeigen deutlich, daß durch die Extraktion mit Nitren ein effizientes Abtrennen der Hemicellulosen unter Erzeugen eines Zellstoffs mit hohem α-Cellulosegehalt erreicht wird. Es hat sich ferner gezeigt, daß bei dem verwendeten Eukalyptuszellstoff eine Verlängerung der Extraktionsdauer über 30 Minuten keine Vorteile bringt. Bei den untersuchten Zeiten (30 min und 16 Stunden) ist praktisch keine Abhängigkeit des erreichten α-Cellulosegehaltes von der Extraktionszeit zu beobachten. Die erhaltenen Werte schwanken innerhalb der Fehlerbreite der Methode. Es ist jedoch zu beachten, daß bei Einsatz von Zellstoffplatten (oder grob zerkleinertem Zellstoff) etwa 1 bis 2 Stunden für eine gleichmäßige Benetzung und Quellung des Zellstoffs benötigt werden, so daß sich die Extraktionszeiten dementsprechend verlängern.

Unter den genannten Bedingungen war kein Cellulose-Abbau meßbar. Im unmittelbaren Vergleich wurden nach der Nitrenextraktion höhere Grenzviskositäten als im unbehandelten Zellstoff gemessen. Dies geht in erster Linie auf die Extraktion von Hemicellulosen zurück.

### Beispiel 3:

### Ein- und zweistufige Extraktion von Eukalyptuszellstoff

Neben der einstufigen Nitrenextraktion wurde zu Vergleichszwecken auch eine zweistufige Nitrenextraktion unter gleichen Bedingungen wie für Beispiel 2 durchgeführt. Die Ergebnisse werden in Tabelle 6 gezeigt.

**Tabelle 6: Grenzviskositäten von Eukalyptuszellstoff mit und ohne Nitrenbehandlung**

| Eukalyptuszellstoff | Viskos. (Cuen)* [ml/g] |
|---|---|
| Unbehandelt | 840 |
| 1stufige Nitrenextraktion | 905 |
| 2stufige Nitrenextraktion | 970 |

| | |
|---|---|
| * Cuen (siehe DIN 54270) | |

Die obigen Viskositätswerte zeigen, daß bei keiner der Extraktionen ein Celluloseabbau stattfindet.

### Beispiel 4:

### Zweistufige Extraktion von Eukalyptuszellstoff und Fichtensulfitzellstoff

Zu Vergleichszwecken wurde neben dem Eukalyptuszellstoff auch Fichtensulfitzellstoff (Paskov) einer zweistufigen Extraktion mit 3%-iger Nitrenlösung bei einem Flottenverhältnis von 1:10 unterzogen. Die Ergebnisse sind in Tabelle 7 gezeigt.

**Tabelle 7: 2stufige Extraktion (Flottenverhältnis 1:10) mit 3%-iger Nitrenlösung**

| Zellstoff | Temp. [°C] | Zahl der Extr.-Stufen | Glucose [%] | Xylose [%] | Mannose [%] |
|---|---|---|---|---|---|
| Eukalyptussulfat | Unbehandelt | | 80,57 | 18,65 | 0 |
| Eukalyptussulfat | 0 | 2 | 94,81 | 5,07 | 0,12 |
| Eukalyptussulfat | 25 | 2 | 96,13 | 3,76 | 0,11 |
| | | | | | |
| Fichtensulfit | Unbehandelt | | 85,74 | 7,72 | 6,96 |
| Fichtensulfit | 25 | 2 | 95,04 | 0,46 | 4,50 |

Die Ergebnisse mit Fichtensulfitzellstoff zeigen, daß Nitren bevorzugt Xylan aus den Papierzellstoffen herauslöst.

Die so gelösten Hemicellulosen wurden aus der Nitrenlösung durch Absenken des pH-Wertes nahezu quantitativ ausgefällt. Die Fällung begann bei pH 10 und war bei pH 4 vollständig. Im Falle der einstufigen Extraktion wurde gemäß der Kohlenhydratanalyse nahezu reines (ca. 99%) Xylan erhalten. Nach zweistufiger Extraktion enthielt die Fällung aus Extrakt ca. 85% Xylan und ca. 15% Glucose. Bemerkenswert ist, daß das auf diesem Wege erhaltene Xylan frei von den sonst üblichen Braunfärbungen in polymerer Form anfiel.

### Beispiel 5:

### Nickelbilanz anhand einer einstufigen Extraktion von Zellstoff mit nachfolgenden Waschschritten

Nachfolgend wird anhand einer tabellarischen Zusammenstellung im einzelnen eine erfindungsgemäße Verfahrenvariante dargestellt. Als Komplexverbindung wurde Nitren herangezogen. Nach der Extraktion wurde abgepreßt und zweimal mit Wasser und einmal mit 0,5%iger Essigsäure gewaschen.

### Extraktion (1-stufig)

| **Zellstoff C**ₒ | | | |
|---|---|---|---|
| Brutto | Feuchte | α-Cellulose | Hemicellulosen (Xylan) |
| **87g** | **6,95%** | **65,2 g** | **15,0 g** |

| **Nitren-Lsg.** | | |
|---|---|---|
| Lsg ges. | Nitren gemessen | Ni gemessen |
| 869 g | 2,73% | 6,69 g/l |
| | 23,7 g | 5,8 g |

| **Gesamteinsatzmenge** | | |
|---|---|---|
| Flotte | Nitren | Ni |
| **956 g** | **23,7 g** | **5,8 g** |

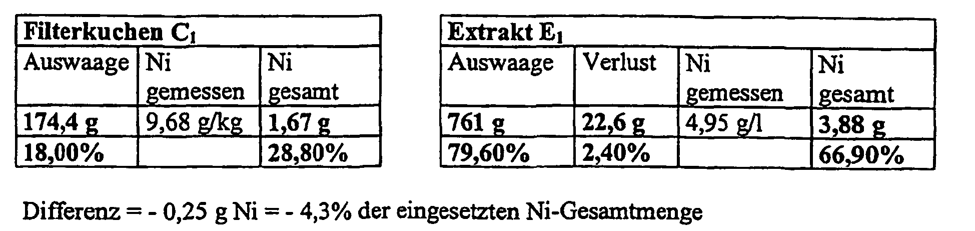

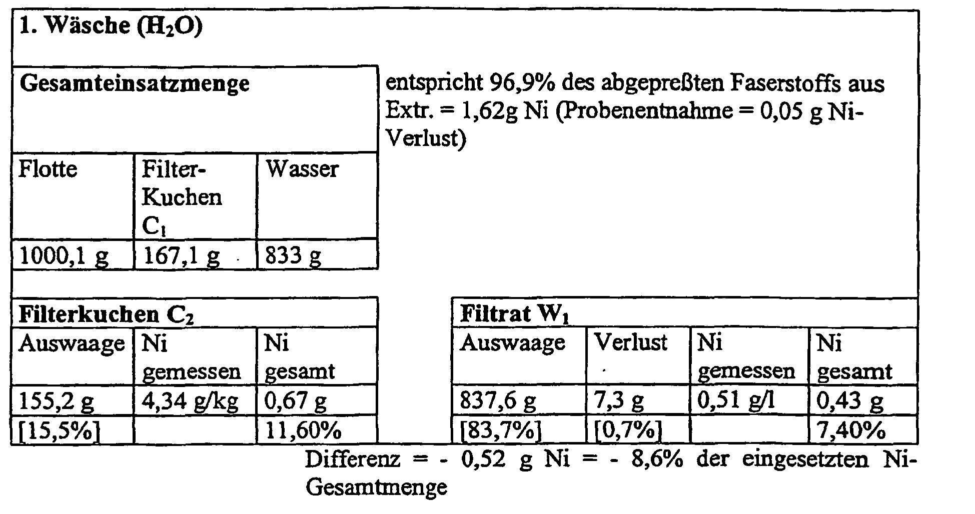

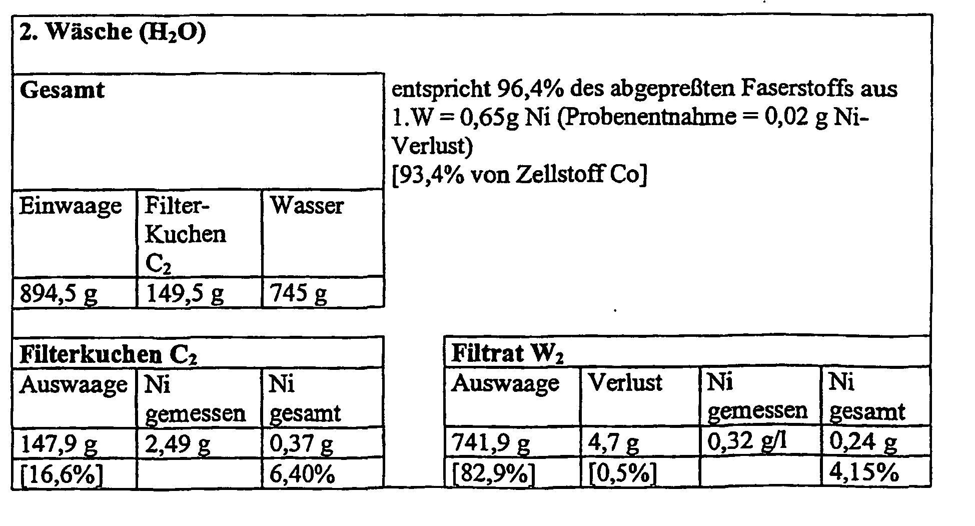

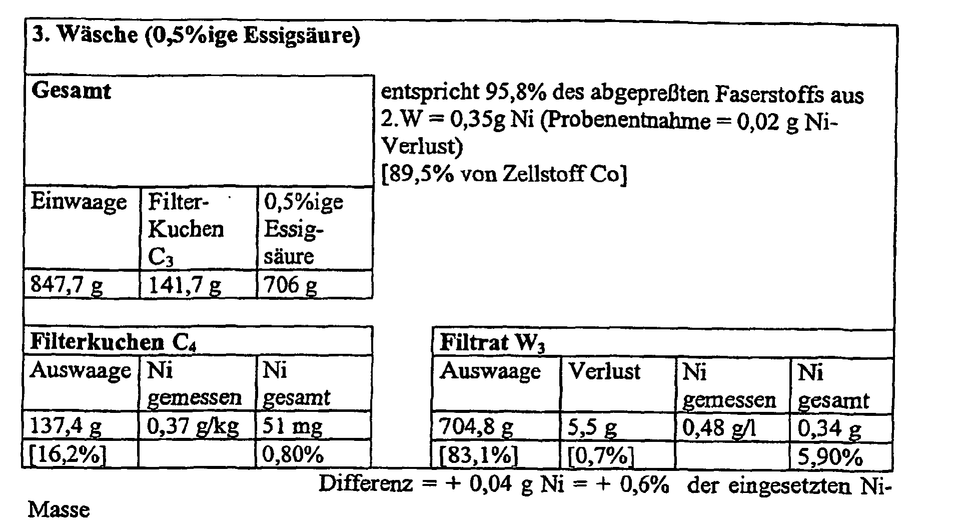

Der Gesamtverlust an Nickel beträgt 2,2%.

## Patentansprüche

1. Verfahren zum Abtrennen von Hemicellulosen aus hemicellulosehaltiger Biomasse, **gekennzeichnet durch** die folgenden Schritte:
a) Extrahieren der Hemicellulosen aus der hemicellulosehaltigen Biomasse **durch** Behandeln mit einer Komplexverbindung in wäßriger Lösung unter Bilden eines löslichen Komplexes der Hemicellulosen, wobei als Komplexverbindung im Schritt a) eine Koordinationsverbindung aus einem Übergangsmetall und einem ein- oder mehrzähnigen stickstoffhaltigen und/oder sauerstoffhaltigen Liganden eingesetzt wird, und
b) Abtrennen der komplexierten Hemicellulosen aus der Biomasse.

2. Verfahren nach Anspruch 1, **dadurch gekennzeichnet, daß** als hemicellulosehaltige Biomasse Rohzellstoff eingesetzt wird.

3. Verfahren nach Anspruch 2, **dadurch gekennzeichnet, daß** ein Rohzellstoff eingesetzt wird, der durch Delignifizierung von lignocellulosehaltiger Biomasse, insbesondere von Holz, gewonnen wurde.

4. Verfahren nach mindestens einem der Ansprüche 1 bis 3, **dadurch gekennzeichnet, daß** die Biomasse fein zerkleinert, insbesondere in gemahlener Form, eingesetzt wird.

5. Verfahren nach einem der Ansprüche 1 bis 4, **dadurch gekennzeichnet, daß** als Übergangsmetall Nickel, Kupfer, Cadmium, Kobalt, Palladium und/oder Zink eingesetzt wird.

6. Verfahren nach einem der Ansprüche 1 bis 5, **dadurch gekennzeichnet, daß** ein mehrzätiniger stickstoffhaltiger Ligand eingesetzt wird.

7. Verfahren nach Anspruch 6, **dadurch gekennzeichnet, daß** der meluzähnige stickstoffhaltige Ligand ausgewählt wird aus der aus Tris(2-aminoethyl)amin, Ethylendiarnin und/oder Diethylentriamin bestehenden Gruppe.

8. Verfahren nach mindestens einem der vorhergehenden Ansprüche, **dadurch gekennzeichnet, daß** als Komplexverbindung [Ni(tris(2-aminoethyl)amin)(OH)₂] eingesetzt wird.

9. Verfahren nach mindestens einem der vorhergehenden Ansprüche, **dadurch gekennzeichnet, daß** die Komplexverbindung in der wäßrigen Lösung in einer Konzentration von etwa 0,1 bis 10 Gew.-%, insbesondere etwa 1 bis 3 Gew.-%, vorliegt.

10. Verfahren nach mindestens einem der vorhergehenden Ansprüche, **dadurch gekennzeichnet, daß** die Extraktion bei einer Temperatur von etwa 0°C bis 90°C, insbesondere bei etwa 10°C bis 80°C, durchgeführt wird.

11. Verfahren nach Anspruch 10, **dadurch gekennzeichnet, daß** die Extraktion bei einer Temperatur von etwa 20 bis 40°C durchgeführt wird.

12. Verfahren nach mindestens einem der vorhergehenden Ansprüche, **dadurch gekennzeichnet, daß** die Extraktion etwa 5 min bis 16 Stunden, insbesondere etwa 15 min bis 2 Stunden, lang durchgeführt wird.

13. Verfahren nach mindestens einem der vorhergehenden Ansprüche, **dadurch gekennzeichnet, daß** bei der Extraktion ein Flottenverhältnis im Bereich von etwa 1:3 bis 1:30, insbesondere etwa 1:5 bis 1:20, gewählt wird.

14. Verfahren nach mindestens einem der vorhergehenden Ansprüche, **dadurch gekennzeichnet, daß** die Extraktion bei einem pH-Wert von etwa 10 bis 14, insbesondere etwa 13 bis 14, durchgeführt wird.

15. Verfahren nach mindestens einem der vorhergehenden Ansprüche, **dadurch gekennzeichnet, daß** die komplexierten Hemicellulosen aus der wäßrigen Lösung gemäß Schritt b) durch Filterpressen abgetrennt werden.

16. Verfahren nach mindestens einem der vorhergehenden Ansprüche, **dadurch gekennzeichnet, daß** die verfahrensmodifizierte Biomasse einem oder mehreren Waschschritten unterzogen wird.

17. Verfahren nach Anspruch 16, **dadurch gekennzeichnet, daß** die erhaltene verfahrensmodifizierte Biomasse zur Absenkung des Nickelgehalts einer Wäsche mit Wasser und anschließend mit verdünnter Säure und/oder Komplexbildner für das Übergangsmetall unterzogen wird.

18. Verfahren nach mindestens einem der vorhergehenden Ansprüche, **dadurch gekennzeichnet, daß** die komplexierten Hemicellulosen in wäßriger Lösung nach Abtrennen aus der Biomasse so behandelt werden, daß die Hemicellulosen aus der Lösung ausfallen.

19. Verfahren nach Anspruch 18, **dadurch gekennzeichnet, daß** das Ausfällen der Hemicellulosen durch Absenken des pH-Wertes auf unter etwa 10, insbesondere auf etwa 5 bis 3, erfolgt.

20. Verfahren nach Anspruch 18 oder 19, **dadurch gekennzeichnet, daß** die Hemicellulosen nach dem Ausfällen isoliert werden.

21. Verfahren nach mindestens einem der vorhergehenden Ansprüche, **dadurch gekennzeichnet, daß** die abgetrennten Hemicellulosen zum Absenken des Nickelgehalts einer Wäsche mit einer wäßrigen Lösung von Ethanolamin, NaOH, Ammoniak und/oder Tris-(2-aminoethyl)amin unterzogen werden.

## Claims

1. A method for separating hemicelluloses from hemicellulose-containing biomass, **characterised by** the following steps:
a) extraction of the hemicelluloses from the hemicellulose-containing biomass by treating it with a complex compound in aqueous solution thus forming a soluble complex of the hemicelluloses, wherein in step a) as complex compound a coordination compound from a transition metal and from a unidentate or polydentate nitrogen-containing and/or oxygen-containing ligand is used,
b) separation of the complexed hemicelluloses from the biomass.

2. A method according to claim 1, **characterised in that** raw pulp is used as hemicellulose-containing biomass.

3. A method according to claim 2, **characterised in that** a raw pulp is used that has been obtained by delignification of lignocellulose-containing biomass, in particular from wood.

4. A method according to at least one of claims 1 to 3, **characterised in that** the biomass is introduced in a finely comminuted, particularly ground, form.

5. A method according to one of claims 1 to 4, **characterised in that** nickel, copper, cadmium, cobalt, palladium and/or zinc is used as transition metal.

6. A method according to one of claims 1 to 5, **characterised in that** a polydentate nitrogen-containing ligand is used.

7. A method according to claim 6, **characterised in that** the polydentate nitrogen-containing ligand is selected from the group comprising tris(2-aminoethyl)amine, ethylene diamine and/or diethylene triamine.

8. A method according to at least one of the preceding claims, **characterised in that** as complex compound [Ni(tris(2-aminoethyl)amine)(OH)₂] is used.

9. A method according to at least one of the preceding claims, **characterised in that** the complex compound in aqueous solution is present in a concentration of about 0.1 to 10% by weight, in particular about 1 to 3% by weight.

10. A method according to at least one of the preceding claims, **characterised in that** the extraction is carried out at a temperature of about 0°C to 90°C, in particular about 10°C to 80°C.

11. A method according to claim 10, **characterised in that** the extraction is carried out at a temperature of about 20°C to 40°C.

12. A method according to at least one of the preceding claims, **characterised in that** the extraction is carried out for about 5 min to 16 hours, in particular about 15 min to 2 hours.

13. A method according to at least one of the preceding claims, **characterised in that** during the extraction a liquor ratio in the range of about 1:3 to 1:30, in particular about 1:5 to 1:20 is selected.

14. A method according to at least one of the preceding claims, **characterised in that** the extraction is carried out at a pH value of about 10 to 14, in particular about 13 to 14.

15. A method according to at least one of the preceding claims, **characterised in that** the complexed hemicelluloses are separated according to step b) from the remaining biomass by filter presses.

16. A method according to at least one of the preceding claims, **characterised in that** the biomass, modified by the method, is subjected to one or several washing stages.

17. A method according to claim 16, **characterised in that** the biomass, modified by the method, for the purpose of reducing the nickel contents is subjected to a washing with water and subsequently with diluted acid and/or complex former for the transition metal.

18. A method according to at least one of the preceding claims, **characterised in that** after separation from the biomass the complexed hemicelluloses are so treated that the hemicelluloses precipitate from the solution.

19. A method according to claim 18, **characterized in that** the precipitation of the hemicelluloses is carried out by lowering the pH value to about below 10, in particular about 5 to 3.

20. A method according to claim 18 or 19, **characterised in that** after the precipitation the hemicelluloses are isolated.

21. A method according to at least one of the preceding claims, **characterised in that** the separated hemicelluloses to reduce the nickel contents are subjected to a washing with an aqueous solution of ethanol amine, NaOH ammonia and/or tris(2-aminoethyl)amine.

## Revendications

1. Procédé pour séparer des hémicelluloses d'une biomasse contenant des hémicelluloses, **caractérisé par** les étapes suivantes :
a) extraction des hémicelluloses de la biomasse qui les contient par traitement avec un composé complexe en solution aqueuse avec formation d'un complexe soluble des hémicelluloses, en utilisant comme composé complexe dans l'étape a) un composé de coordination formé d'un métal de transition et d'un ligand monodenté ou multidenté contenant de l'azote et/ou contenant de l'oxygène, et
b) séparation des hémicelluloses complexées de la biomasse.

2. Procédé suivant la revendication 1, **caractérisé en ce qu'**on utilise de la cellulose brute comme biomasse contenant des hémicelluloses.

3. Procédé suivant la revendication 2, **caractérisé en ce qu'**on utilise une cellulose brute qui a été obtenue par délignification de biomasse contenant de la lignocellulose, en particulier du bois.

4. Procédé suivant au moins l'une des revendications 1 à 3, **caractérisé en ce que** la biomasse est utilisée sous une forme finement divisée, en particulier sous la forme broyée.

5. Procédé suivant l'une des revendications 1 à 4, **caractérisé en ce qu'**on utilise comme métal de transition le nickel, le cuivre, le cadmium, de cobalt, le palladium et/ou le zinc.

6. Procédé suivant l'une des revendications 1 à 5, **caractérisé en ce qu'**on utilise un ligand multidenté contenant de l'azote.

7. Procédé suivant la revendication 6, **caractérisé en ce que** le ligand multidenté contenant de l'azote est choisi dans le groupe constitué de la tris(2-aminoéthyl)amine, de l'éthylènediamine et/ou de la diéthylènetriamine.

8. Procédé suivant au moins l'une des revendications précédentes, **caractérisé en ce qu'**on utilise comme composé complexe [Ni(tris(2-aminoéthyl)amine)(OH)₂].

9. Procédé suivant au moins l'une des revendications précédentes, **caractérisé en ce que** le composé complexe est présent dans la solution aqueuse à une concentration d'environ 0,1 à 10 % en poids, en particulier d'environ 1 à 3 % en poids.

10. Procédé suivant au moins l'une des revendications précédentes, **caractérisé en ce que** l'extraction est conduite à une température d'environ 0°C à 90°C, en particulier à une température d'environ 10°C à 80°C.

11. Procédé suivant la revendication 10, **caractérisé en ce que** l'extraction est conduite à une température d'environ 20 à 40°C.

12. Procédé suivant au moins l'une des revendications précédentes, **caractérisé en ce que** la durée de l'extraction va d'environ 5 minutes à 16 heures, en particulier d'environ 15 minutes à 2 heures.

13. Procédé suivant au moins l'une des revendications précédentes, **caractérisé en ce qu'**un rapport de bain dans la plage d'environ 1:3 à 1:30, en particulier d'environ 1:5 à 1:20 est choisi pour l'extraction.

14. Procédé suivant au moins l'une des revendications précédentes, **caractérisé en ce que** l'extraction est conduite à un pH d'environ 10 à 14, en particulier d'environ 13 à 14.

15. Procédé suivant au moins l'une des revendications précédentes, **caractérisé en ce que** les hémicelluloses complexées sont séparées de la solution aqueuse selon l'étape b) par des filtres-presses.

16. Procédé suivant au moins l'une des revendications précédentes, **caractérisé en ce que** la biomasse modifiée par le traitement est soumise à une ou plusieurs étapes de lavage.

17. Procédé suivant la revendication 16, **caractérisé en ce que** la biomasse obtenue modifiée par le traitement est soumise, en vue d'abaisser la teneur en nickel, à un lavage à l'eau puis avec un acide dilué et/ou un agent complexant pour le métal de transition.

18. Procédé suivant au moins l'une des revendications précédentes, **caractérisé en ce que** les hémicelluloses complexées en solution aqueuse après leur séparation de la biomasse sont traitées de telle manière qu'elles précipitent dans la solution.

19. Procédé suivant la revendication 18, **caractérisé en ce que** la précipitation des hémicelluloses est effectuée par abaissement du pH à une valeur inférieure à environ 10, notamment à une valeur d'environ 5 à 3.

20. Procédé suivant la revendication 18 ou 19, **caractérisé en ce que** les hémicelluloses sont isolées après la précipitation.

21. Procédé suivant au moins l'une des revendications précédentes, **caractérisé en ce que** les hémicelluloses séparées sont soumises, en vue d'abaisser la teneur en nickel, à un lavage avec une solution aqueuse d'éthanolamine, de NaOH, d'ammoniac et/ou de tris-(2-aminoéthyl)amine.
